(19) Europäisches Patentamt
European Patent Office
Office européen des brevets

(11) EP 4 089 586 A1

(12) **EUROPEAN PATENT APPLICATION**
published in accordance with Art. 153(4) EPC

(43) Date of publication:
16.11.2022 Bulletin 2022/46

(51) International Patent Classification (IPC):
*G06N 3/08* (2006.01)

(21) Application number: 20912017.9

(52) Cooperative Patent Classification (CPC):
G06N 3/08

(22) Date of filing: 10.01.2020

(86) International application number:
PCT/JP2020/000644

(87) International publication number:
WO 2021/140643 (15.07.2021 Gazette 2021/28)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: FUJITSU LIMITED
Kawasaki-shi, Kanagawa 211-8588 (JP)

(72) Inventor: DANJO Takumi
Kawasaki-shi, Kanagawa 211-8588 (JP)

(74) Representative: Hoffmann Eitle
Patent- und Rechtsanwälte PartmbB
Arabellastraße 30
81925 München (DE)

(54) **NEURAL NETWORK SYSTEM, NEURAL NETWORK TRAINING METHOD, AND NEURAL NETWORK TRAINING PROGRAM**

(57) The neural network system comprises a plurality of processors accessing a memory, wherein, in each of a plurality of trainings, each of the processors: executes a calculation of a neural network based on an input of training data to calculate an output of the network; and calculates a gradient for parameters of the difference between the output and teacher data, wherein (1) when the accumulation of the gradient is not small, the processors execute a first update processing by transmitting the accumulations of the gradients to other processors to integrate the accumulations, receiving the integrated accumulations, and updating the parameters with the integrated accumulations, and (2) when the accumulation of the gradient is small, the processors execute a second update processing by not integrating the accumulations of the gradients, but respectively updating the parameters with the calculated gradients or update amounts.

FIG. 9

**Description**

TECHNICAL FIELD

The present invention relates to a neural network system, a neural network learning method system, and a neural network learning program system.

BACKGROUND ART

A neural network is, for example, configured to multiply a plurality of inputs by respective weights, input a value obtained by adding together the plurality of resultant multiplication values in an activation function of a neuron in an output layer, and output an output of the activation function. Such a neural network having a simple configuration is called a simple perceptron. Furthermore, a neural network that has a plurality of layers of the above simple configuration and inputs the output of one layer to another layer is called a multilayer perceptron. Also, a deep neural network has a plurality of hidden layers between the input layer and the output layer, as a multilayer perceptron. Hereinafter, neural network will be abbreviated to NN (Neural Network).

A NN optimizes parameters such as the aforementioned weights by learning using a large amount of training data. While the accuracy of a model can be enhanced by using more training data, there is a problem in that this increases the number of learning iterations and increases the computation time required for learning.

As a method of shortening the computation time required for learning by a NN, data-parallel distributed learning that divides the training data and executes computational operations for learning in parallel with a plurality of computational nodes has been proposed. Data-parallel distributed learning is described, for example, in the following patent literatures.

PRIOR ARTs

PATENT LITERATURE

Patent Literature 1: Japanese Patent Application Publication No. 2018-120470
Patent Literature 2: Japanese Patent Application Publication No. 2012-79080

SUMMARY OF INVENTION

PROBLEMS TO BE SOLVED BY THE INVENTION

In data-parallel distributed learning, training data is divided by the number of computational nodes, and the plurality of computational nodes execute computational operations for learning based on respective training data to calculate the gradient of an error function of the output of the NN for the parameters of the NN, and calculate update amounts of the parameters obtained by multiplying the gradient by a learning rate. Thereafter, the computational nodes calculate the average of the update amounts of the nodes, and all the computational nodes update the parameters with the average of the update values. Due to the plurality of computational nodes performing computational operations for learning in parallel with respective training data, the computation time required for learning can be shortened compared with a single computational node performing learning computations with single piece of training data.

However, in order to calculate the average of the update amounts respectively calculated by the plurality of computational nodes, it is necessary to aggregate the update amounts calculated by each of the plurality of computational nodes through addition or the update amounts, and to share the aggregate addition value with the plurality of computational nodes. At the time of aggregation and the time of sharing, data communication processing is performed between the plurality of computational nodes.

As a result, although data-parallel distributed learning shortens the computation time required for learning by performing computational operations on training data in parallel, but the effect of shortening the computation time is reduced due to the time taken for communication processings between the computational nodes that is performed every learning process.

In view of this, an object of a first aspect of the present embodiment is to provide a neural network system, a neural network learning method and a neural network learning program that improve the throughput of data-parallel distributed learning.

MEANS FOR SOLVING THE PROBLEMS

A first aspect of disclosed embodiment is a neural network system including a memory; and a plurality of processors configured to access the memory, wherein in each of a plurality of iterations of learning, the plurality of processors each executes a computational operation of a neural network based on an input of training data and a parameter within a neural network to calculate an output of the neural network, and calculates a gradient of a difference between the calculated output and supervised data of the training data or an update amount based on the gradient, in a first case in which a cumulative of the gradient or update amount is not less than a threshold value, the plurality of processors execute first update processing for transmitting, to the other processors among the plurality of processors, a cumulative of a plurality of the gradients or update amounts respectively calculated thereby to aggregate the cumulatives of the plurality of gradients or update amounts, receiving the aggregated cumulatives of the gradients or update amounts, and updating the parameter with the aggregated cumulatives of the gradients or update amounts, and in a second case in which the cumulative of the gradient or update amount is less than the threshold value, the plurality of processors execute second update processing for updating the respective parameters with the gradients or update amounts which the plurality of processors respectively calculates, without aggregating the cumulative of the plurality of gradients or update amounts through transmission.

ADVANTAGEOUS EFFECTS OF THE INVENTION

According to the first aspect, the throughput of data-parallel distributed learning is improved.

BRIEF DESCRIPTION OF DRAWINGS

Fig. 1 is a diagram showing an example configuration of a NN system of the present embodiment.
Fig. 2 is a diagram showing an example of an example of learning processing in a typical NN.
Fig. 3 is a diagram showing the flow of processing of a plurality of computational nodes in data partition-based distributed learning.
Fig. 4 is a flowchart showing the specific processing of the plurality of computational nodes in data partition-based distributed learning.
Fig. 5 is a diagram showing a typical example of Reduce processing and Allreduce processing.
Fig. 6 is a diagram showing an example of Reduce processing and Allreduce processing in the case where NN learning is performed by data partition-based distributed learning.
Fig. 7 is a flowchart of data-parallel distributed learning according to a first embodiment.
Fig. 8 is a flowchart of data-parallel distributed learning according to a second embodiment.
Fig. 9 is a diagram showing an example of change in the update cycle of learning in the second embodiment.

DESCRIPTION OF EMBODIMENTS

[Neural Network System of Present Embodiment]

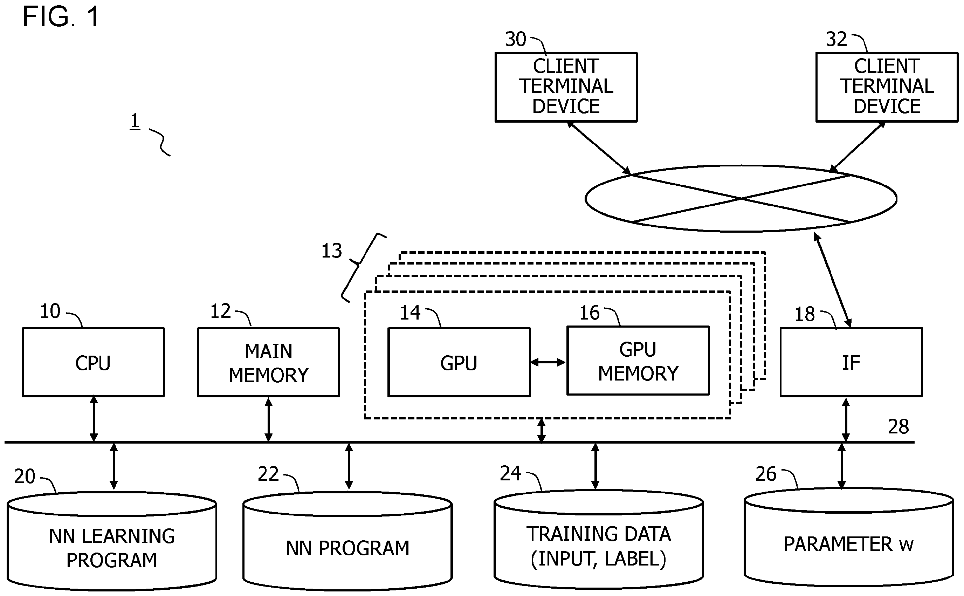

Fig. 1 is a diagram showing an example configuration of a NN system of the present embodiment. A NN system 1 is, for example, a high-performance computer, and has a main processor (CPU: Central Processing Unit) 10, a main memory 12, a sub-processor module 13, and an interface 18 with a network NET. The sub-processor module 13 has, for example, four computational node modules, and each computational node module has a sub-processor 14 and a memory 16 that is accessed by the sub-processor.

Furthermore, the NN system 1 has auxiliary storage devices 20 to 26 that are mass storages, and the auxiliary storage devices store an NN learning program 20, an NN program 22, training data 24 and a parameter w 26. The NN learning program 20 is executed by the processors 10 and 14 to perform processing for learning using training data. Also, the NN program 22 is executed by the processors 10 and 14 to execute computational operations of an NN model. The training data 24 is plural pieces of data each having an input and a label which is supervised data. The parameter 26 is a plurality of weights within the NN optimized by learning, for example.

The main processor 10 executes the NN learning program 20 to cause the plurality of sub-processors 14 to execute the computational operations for NN learning that uses the plural pieces of training data in distributed and in parallel. The four sub-processors 14 are computational nodes composed of processor chips and are configured to be communicable with one another via a bus 28.

The NN system 1 is able to provide a NN platform to client terminals 30 and 32 via the network NET. Other than the configuration of Fig. 1, the NN system 1 may be configured such that a plurality of computers are computational nodes and the plurality of computers are able to communicate with one another.

[Learning NN]

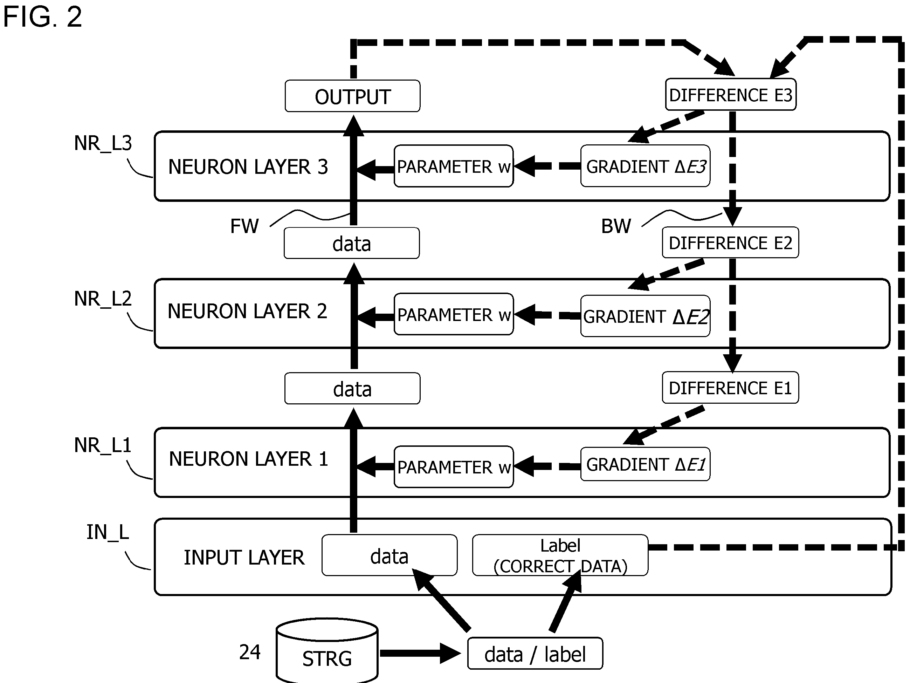

Fig. 2 is a diagram showing an example of learning processing in a typical NN. The NN in Fig. 2 has an input layer IN_L and three neuron layers NR_L1 to NR_L3 which are hidden layers. The third neuronal layer NR_L3 also serves as the output layer.

The following is an outline of the learning processing of the NN. The processor 10 or 14 reads one piece of training data having input data and a label from the training data 24 in the storages, and inputs the input data to the input layer IN_L. The processor executes the NN learning program to execute a computational operation of the first neuron layer NR_L1 using the input training data, and input the computation result to the second neuron layer NR_L2. Furthermore, the processor executes a computational operation of the second neuron layer NR_L2 using that computation result and inputs the computation result to the third neuron layer NR_L3. And finally the processor executes a computational operation of the third neuron layer NR_L3 using that computation result and outputs the computation result. The three neuron layers NR_L1 to NR_L3 executing respective computational operations in order on the input of the input layer IN_L is called forward propagation processing FW.

On the other hand, the processor computes a difference E3 between the label (correct data) of the training data and the output of the third neuron layer NR_3, and differentiates the difference E3 with a parameter w in the neuron layer NR_L3 to obtain a gradient $\Delta$E3. The processor calculates a difference E2 on the second neuron layer NR_L2 from the difference E3, and differentiates the difference E2 with a parameter w in the neuron layer NR_L2 to obtain a gradient $\Delta$E2. The processor then calculates the difference E1 on the first neuron layer NR_L1 from the difference E2, and differentiates the difference E1 with a parameter w in the neuron layer NR_L1 to obtain a gradient $\Delta$E1. Furthermore, computing the gradients $\Delta$E3, $\Delta$E2 and $\Delta$E1 at the layers NR_L3, NR_L2 and NR_L1 in order while propagating the difference E3 between the output of the third neuron layer NR_L3, which is the output layer, and the label of the correct value to the second and first neuron layers is called back propagation processing BW.

Generally, in the computational processing of each neuron layer, the respective computational operations are performed on the input to the layer and a plurality of parameters w. In supervised learning, the plurality of parameters w are updated by a gradient method in each learning iteration, such that the difference between the output estimated by the NN based on the input data of the training data and the label (supervised data) is minimized. The parameter update amount is calculated by differentiating the difference E by the parameter w and multiplying the derived gradient $\Delta$E by a learning rate $\eta$.

[Data Partition-based Distributed Learning]

With NNs, especially deep NNs (hereinafter referred to as "DNNs"), the accuracy of the NN or DNN can be improved by more training data being used and by the iterations of learning using training data being increased. However, as the amount of training data increases, the learning time of the NN system increases accordingly. In view of this, data-parallel distributed learning, which is performed by distributing learning processing among a plurality of computational nodes, is effective in shortening the learning time.

Data-parallel distributed learning causes a plurality of computational nodes to execute learning respectively using plural pieces of training data in distributed manner. That is, a plurality of computational nodes execute forward propagation processing FW and back propagation processing BW using the respective training data to calculate the gradients $\Delta$E corresponding to the parameters w of the differences E of the NN of the respective computational nodes. The plurality of nodes then calculate respective gradients $\Delta$E or parameter update amounts $\Delta$w obtained by multiplying the gradients by the learning rate and share the calculated gradients $\Delta$E or parameter update amounts $\Delta$w with the plurality of nodes. Furthermore, the plurality of nodes acquire the average of the gradients $\Delta$E or the average of the update amounts $\Delta$w, and update the respective parameters w of the NN with the average of the update amounts $\Delta$w.

As in the above learning method, processing in which a plurality of nodes each execute forward propagation processing and back propagation processing using one piece of training data to calculate a gradient or update amount, and update the parameter w of each node based on the average of the update amounts is processing corresponding to a mini-batch method that takes training data of the number of nodes as a mini-batch unit. The case where a plurality of nodes each execute forward propagation and back propagation processing in a plurality of processes using training data of the number of processes corresponds to a mini-batch method that takes, as a mini-batch, training data of a number obtained by multiplying the number of nodes by the number of processes of each node.

The above processing for calculating the average of the gradients or update amounts includes Reduce processing and Allreduce processing that is included in an MPI (Message Passing Interface), which is a standard specification of parallel computing. In the Reduce processing and Allreduce processing the respective parameters of a plurality of computational nodes are aggregated (e.g. added), and the plurality of computational nodes all acquires the aggregate value. This processing requires data communication between the plurality of computational nodes.

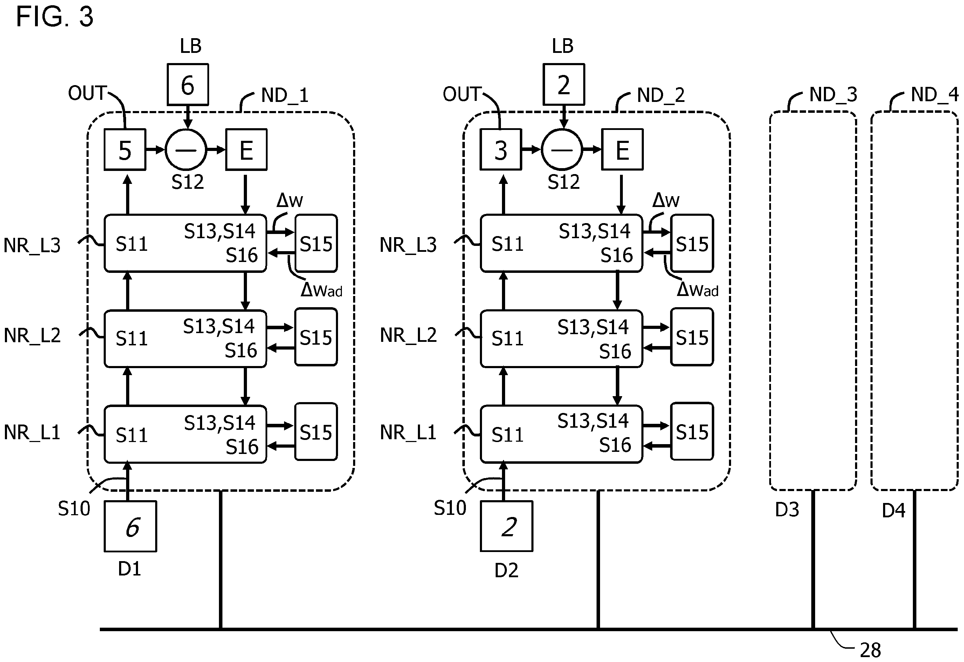

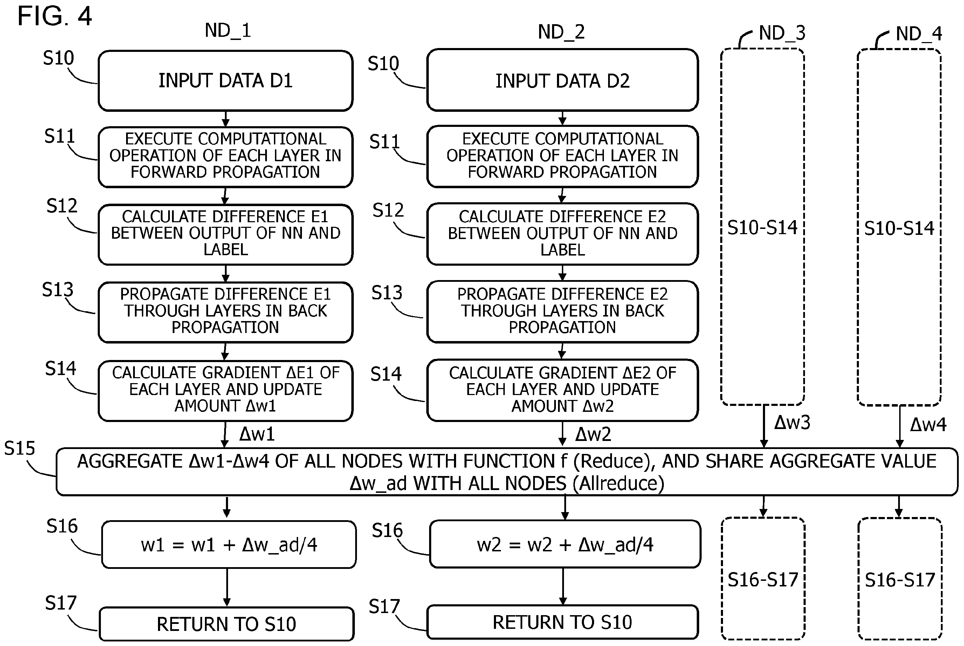

Fig. 3 is a diagram showing the flow of processing of a plurality of computational nodes in data partition-based distributed learning. Also, Fig. 4 is a flowchart showing the specific processing of the plurality of computational nodes in data partition-based distributed learning. In these examples, four computational nodes ND_1 to ND_4 each perform learning using one piece of training data, a given computational node aggregates the update amounts Δw of the parameters w respectively calculated by the four computational nodes, and the computational nodes update the respective parameters with the average value of the aggregate update amounts. An outline of data partition-based distributed learning will be described below, with reference to Figs. 3 and 4.

The four computational nodes correspond to the four sub-processors 14 in Fig. 1, for example. In the case where the NN system is constituted by four computers, the four computational nodes correspond to the processors of the four computers.

The four computational nodes ND_1 to ND_4 perform the following processing by executing the NN learning program. Initially, each of the four computational nodes ND_1 to ND_4 inputs data corresponding thereto from data D1 to D4 of the training data (S10). The data D1 to D4 are respectively input to the first neuron layer NR_L1 of the computational nodes. The computational nodes then execute forward propagation processing FW and execute the computational operations of the neuron layers (S11). In Fig. 3, the data D1 and D2 are handwritten characters "6" and "2".

Next, the computational nodes respectively calculate differences E1 to E4 of the output OUT of the NN and the label LB which is supervised data. In the computational nodes ND_1 and ND_2, the outputs OUT is "5" and "3" and the labels LB are "6" and "2". Here, the differences E1 to E3 are the sum of squares of the difference between the output OUT and the label LB. More specifically, the NN is a model for estimating handwritten numbers, and the third neuron layer, which is the output layer, outputs the respective probabilities that numbers in the input data correspond to numbers 0 to 9. In the probabilities of numbers 0 to 9 of the supervised data, the probability of the label LB being the indicated number is "1", and the probability of the label LB being a different number is "0", with respect to the output of these ten probabilities. The computational node then calculates the sum of squares of the differences of the respective probabilities as the difference E.

Each computational node then propagates the respective difference E through each neuron layer (S13), and differentiates the propagated difference E by the parameter w of each neuron layer to calculate the gradient ΔE. Furthermore, each computational node multiplies the gradient ΔE by the learning rate η to calculate the update amount Δw of the parameter w(S14).

Here, the four computational nodes ND_1 to ND_4 communicate the respective update amounts Δw with one another via the bus 28 between the computational nodes, and a given computational node performs Reduce processing for aggregating the update amounts Δw1 to Δw4 of the parameters w1 to w4 of all the nodes. The aggregation is addition (or extraction of the maximum value), for example. The four computational nodes then perform Allreduce processing for receiving an aggregate addition value Δw_ad via the bus 28 and sharing the aggregate addition value with all the computational nodes (S15).

Next, each computational node calculates an average value Δw_ad/4 of the update amounts Δw by dividing the aggregate addition value Δw_ad by the number of computational nodes "4", and adds the average value to the existing parameters w1 to w4 to update the respective parameters (S16). One learning iteration by mini-batching thereby ends. When the learning ends, the parameters of the NN of the computational nodes are updated to the same value. The computational nodes then return to the processing of S10 and executes the next iteration of learning.

Next, Reduce processing and Allreduce processing will be described.

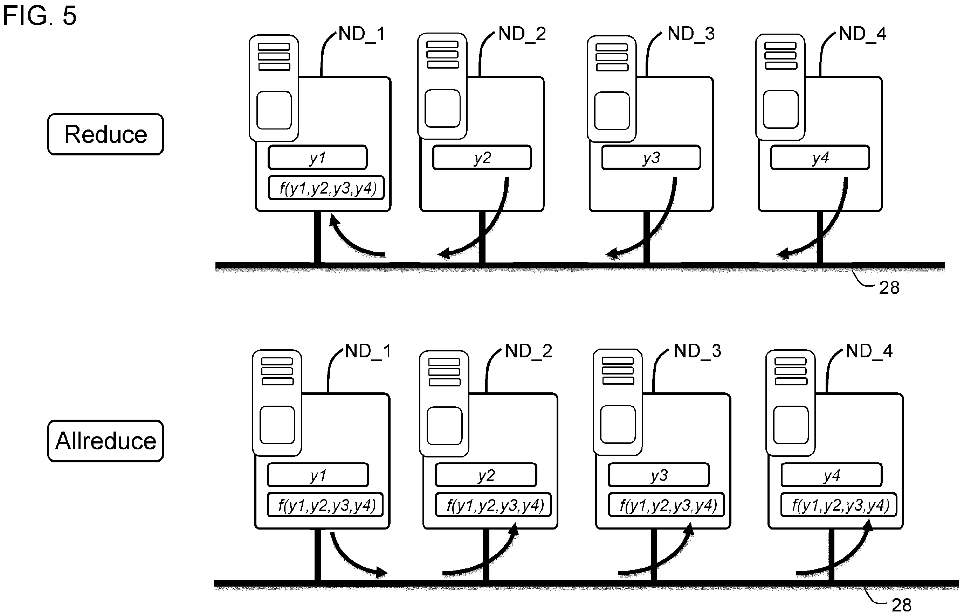

Fig. 5 is a diagram showing a typical example of Reduce processing and Allreduce processing. In the example in Fig. 5, the four computational nodes ND_1 to ND_4 respectively possess values y1 to y4. In the Reduce processing, the computational nodes communicate the respective values y1 to y4 via the bus 28, and the one computational node ND_1, for example, receives all the values y1 to y4, and performs a computational operation on the four values with a predetermined function f to calculate an aggregate value f(y1,y2,y3,y4).

Next, in the Allreduce processing, the computational node ND_1 transmits the aggregate value f(y1,y2,y3,y4) to the other computational nodes ND_2 to ND_4 via the bus 28 and shares the aggregate value with all the computational nodes.

In the example in Fig. 5, the computational nodes ND_2 to ND_4 transmit the respective values y2 to y4 to the computational node ND_1. However, the computational node ND_4 may transmit the value y4 to the computational node ND_3 and the computational node ND_3 may calculate an addition value y3+y4, the computational node ND_2 may transmit the value y2 to the arithmetic ND_1 and the computational node ND_1 may calculate the addition value y1+y2, and then the computational node ND_3 may transmit the addition value y3+y4 to the computational node ND_1 and the computational node ND_1 may calculate the aggregate value f(y1,y2,y3,y4) = y1+y2+y3+y4.

Also, as an alternative processing method, in the case where the four computational nodes ND_1 to ND_4 respectively possess array data (w1,x1,y1,z1), (w2,x2,y2,z2), (w3,x3,y3,z3), and (w4,x4,y4,z4), the computational nodes respectively transmit data w, data x, data y and data z to the computational node ND_1, the computational node ND_2, the computational node ND_3 and the computational node ND_4. Then,

the computational node ND_1 calculates an aggregate value f(w1,w2,w3,w4) = w1+w2+w3+w4,
the computational node ND_2 calculates an aggregate value f(x1,x2,x3,x4) = x1+x2+x3+x4,
the computational node ND_3 calculates an aggregate value f(y1,y2,y3,y4) = y1+y2+y3+y4, and
the computational node ND_4 calculates an aggregate value f(z1,z2,z3,z4) = z1+z2+z3+z4.

The processing to this point is the Reduce processing. Next, the computational nodes transmit the respectively calculated aggregate values to the other computational nodes via the bus 28, and all the computational nodes acquire and share the aggregate values. This processing is the Allreduce processing.

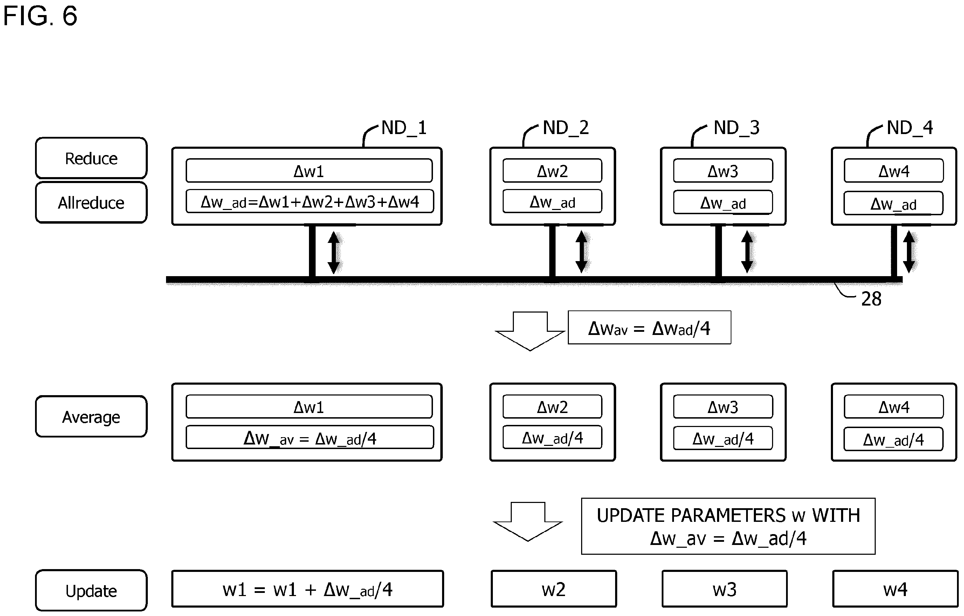

Fig. 6 is a diagram showing an example of Reduce processing and Allreduce processing in the case where NN learning is performed by data partition-based distributed learning. As described in Fig. 4, when the computational nodes perform Reduce processing at the stage at which the computational nodes have calculated the update amounts $\Delta w1$ to $\Delta w4$ of the respective parameters w1 to w4, the update amounts $\Delta w1$ to $\Delta w4$ of all the computational nodes are transmitted to the one computational node ND_1, for example, and the computational node ND_1 calculates the addition value $\Delta w\_ad$ of the update amounts $\Delta w1$ to $\Delta w4$ as the aggregate value with the addition function f. The computational node ND_1 then transmits the addition value $\Delta w\_ad$ to the other computational nodes ND_2 to ND_4, and all the computational nodes acquire and share the addition value.

Next, in the data partition-based distributed learning, the computational nodes ND_1 to ND_4 each divide the addition value $\Delta w\_ad$ by the number of computational nodes "4" to calculate an average value $\Delta w\_av$ of the update amount $\Delta w$ in averaging processing Average. The computational nodes ND_1 to ND_4 then respectively add the average value $\Delta w\_av$ of the update amount to the existing parameters w1 to w4 in update processing Update.

In the mini-batch method, according to the above data-parallel distributed learning, plural pieces of training data of a mini-batch are distributed to a plurality of computational nodes, and the plurality of computational nodes perform computational operations in parallel up to calculating the gradient $\Delta E$ or update amount $\Delta w$ of the parameters, and the parameters w of the computational nodes are updated with the average value of the plurality of update amounts $\Delta w1$ to $\Delta w4$ respectively calculated with the plural pieces of training data. Accordingly, even if the update amount $\Delta w$ calculated with a given piece of training data is an exceptional value that deviates greatly from the update amounts calculated with other pieces of training data, the parameters w of the NN of all the computational nodes are updated with the average value of the plurality of update amounts, thus enabling the adverse effect on learning caused by the exceptional update amount to be suppressed.

On the other hand, due to Reduce processing and Allreduce processing that include communication processing between the computational nodes in each learning iteration being executed, a problem arises in that the processing time of learning increases due to communication processing.

[Data-parallel Distributed Learning according to First Embodiment]

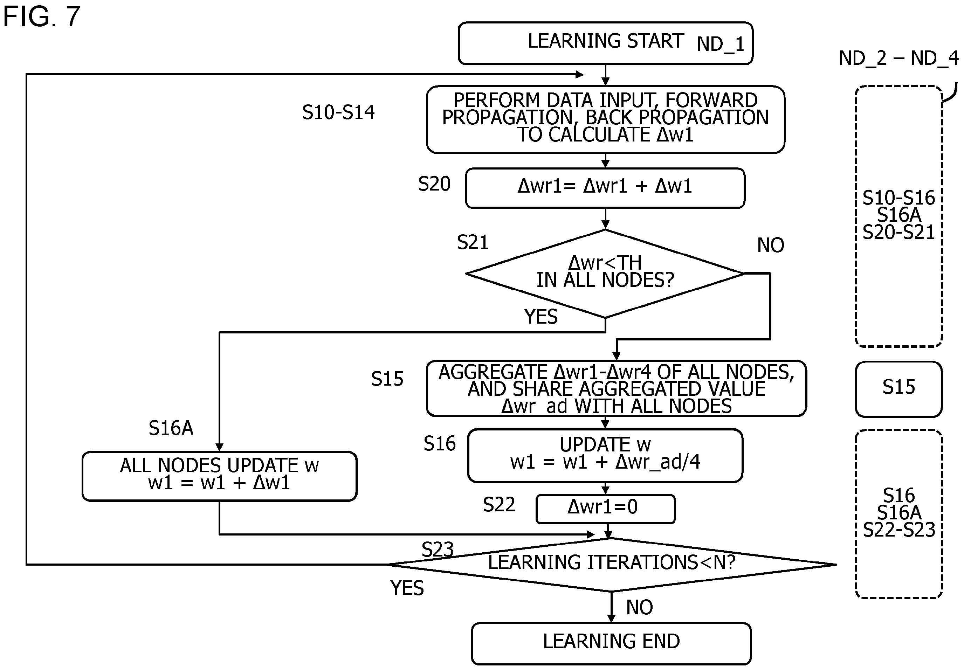

Fig. 7 is a flowchart of data-parallel distributed learning according to a first embodiment. Fig. 7 shows a flowchart of the learning processing of the computational node ND_1 in the flowchart in Fig. 4, and flowcharts of the learning processing of the remaining computational nodes ND_2 to ND_4 are omitted. In this distributed learning, S10 to S16, S16A and S20 to S23 in the flowchart of the learning processing of the computational node ND_1 shown in Fig. 7 are executed similarly in the remaining computational nodes ND_2 to ND_4. The flowcharts of the learning processing of the four computational nodes are obtained by replacing the flowchart of the learning processing of each computational node in Fig. 4 with the flowchart of the learning processing of the computational node ND_1 in Fig. 7.

Here again it is assumed that the four computational nodes each perform learning using one piece of training data, and each computational node optimizes one parameter w within the NN. Although a NN typically has a large number of parameters w, description will first be given with an example of one parameter w of a NN, before later describing how processing is performed on a plurality of parameters w in a NN.

In this distributed learning, Reduce processing and Allreduce processing are not executed in all learning iterations for the gradients $\Delta E$ or update amounts $\Delta w$ respectively calculated by the plurality of computational nodes. In other words, if the gradients or update amounts calculated by the plurality of computational nodes are less than a threshold value, the processor does not perform Reduce processing or Allreduce processing, and updates the parameter w of each computational node using the gradient or update amount calculated by that computational node. And, if the gradients or update amounts calculated by the plurality of computational nodes are not less than the threshold value, the processor performs Reduce processing and Allreduce processing, and updates the parameter w of each computational node using the average value of the aggregate gradient or update amount.

The NN system of the present embodiment thereby shortens the overall processing time of learning by occasionally skipping the communication processing of Reduce processing and Allreduce processing, while suppressing adverse effects caused by the gradients or update amounts of exceptional values according to the mini-batch method.

Note that when Reduce processing and Allreduce processing are performed and the parameters w of the NN of the plurality of computational nodes are updated with the average update amount, after learning in which Reduce processing and Allreduce processing are not executed has been continuously performed, the parameters w of all the computational nodes need to be reset to the same value. In view of this, the computational nodes each accumulate the gradients or update amounts of learning in which Reduce processing and Allreduce processing are not executed, and update the parameters of the computational nodes respectively are updated with the cumulative value of those update amounts, when Reduce processing and Allreduce processing are performed. Thus, each computational node stores a cumulative Er or $\Delta$wr of the gradient E or update amount $\Delta$w calculated when learning is performed.

In the following description, the gradient or update amount is simplified to the update amount $\Delta$w. Note that Reduce processing and Allreduce processing may be performed for the gradient $\Delta$E instead of the update amount $\Delta$w.

The learning processing of the computational nodes will now be described in line with the flowchart in Fig. 7. Although not shown in Fig. 7, immediately after the start of learning, the computational nodes ND_1 to ND_4 reset the respective cumulative update amounts $\Delta$wr1 to $\Delta$wr4 to 0. Next, the computational nodes ND_1 to ND_4 input input data of the training data and perform forward propagation processing, calculation of the difference E1, back propagation processing, and calculation of the update amounts $\Delta$w1 to $\Delta$w4 of the parameters w (S10-S14). The computational nodes then respectively add the calculated update amounts $\Delta$w1 to $\Delta$w4 to the cumulative update amounts $\Delta$wr1 to $\Delta$wr4 (S20). Immediately after the start of learning, the cumulative update amounts of all the computational nodes are all 0, and thus the cumulative update amounts $\Delta$wr1 to wr4 are equal to the update amounts $\Delta$w1 to $\Delta$w4 of the first learning iteration.

Next, the computational nodes determine whether the respective cumulative update amounts $\Delta$wr1 to wr4 are less than a threshold value TH (S21). If the respective cumulative update amounts $\Delta$wr1 to wr4 for all the computational nodes are less than the threshold value TH (YES in S21), the computational nodes update the parameters by respectively adding the update amounts $\Delta$w1 to $\Delta$w4 to the parameters w1 to w4 (S16A). As a result, the computational nodes update the respective parameters w1 to w4 with the respectively calculated update amounts $\Delta$w1 to $\Delta$w4.

On the other hand, if respective cumulative update amounts $\Delta$wr1 to wr4 for all the computational nodes are not less than the threshold value TH (NO in S21), the computational nodes ND_1 to ND_4 transmit/receive the respectively calculated cumulative update amounts $\Delta$wr1 to $\Delta$wr4, aggregate the cumulative update amounts $\Delta$wr1 to $\Delta$wr4 of all the computational nodes through addition or the like (Reduce processing), and share an aggregate cumulative update amount $\Delta$wr_ad with all the nodes (Allreduce processing) (S15). Specifically, one of the computational nodes ND_1 to ND_4, such as the computational node ND_1, for example, receives and adds the cumulative update amounts $\Delta$wr2 to $\Delta$wr4 from the other computational nodes ND_2 to ND_4, and transmits the added aggregate cumulative update amount $\Delta$wr_ad to the other computational nodes ND_2 to ND_4. NO in the above determination S21 means that not all the cumulative update amounts $\Delta$wr1 to wr4 are less than the threshold value TH, and that at least one cumulative update amount is not less than the threshold value TH. YES in the above determination S21 means that all the cumulative update amounts $\Delta$wr1 to wr4 are less than the threshold value TH.

The computational nodes ND_1 to ND_4 then each divides the aggregated cumulative update amount $\Delta$wr_ad by the number of computational nodes "4" to derive an average value $\Delta$wr_ad/4 of the cumulative update amounts, and add the average value $\Delta$wr_ad/4 of the cumulative update amounts to the values of the parameters w1 to w4, which are before accumulation of the update amounts of respective parameters w1 to w4 was started, to update the parameters to a common value (S16). Along with this, the computational nodes reset the respective cumulative update amounts $\Delta$wr1 to $\Delta$wr4 to 0 (S22).

The computational nodes repeat the above learning processing for the duration that the total number of learning iterations is less than N (S23).

According to the above learning processing, if the cumulative update amounts $\Delta$wr1 to $\Delta$wr4 of the parameters calculated by the computational nodes ND_1 to ND_4 are all less than the threshold value (YES in S21), the computational nodes ND_1 to ND_4 do not perform Reduce processing or Allreduce processing, thus eliminating the time required for communication between the computational nodes in the Reduce and Allreduce processing and enabling the overall time required for learning to be shortened. If the computational nodes respectively successively update the parameters w1 to w4 with the update amounts $\Delta$w1 to $\Delta$w4 without performing Reduce processing and Allreduce processing, the computational nodes calculate and record the cumulative update amounts $\Delta$wr1 to $\Delta$wr4.

Thereby, if the cumulative update amounts $\Delta$wr1 to $\Delta$wr4 of the parameters calculated by the computational nodes ND_1 to ND_4 are all not less than the threshold value (NO in S21), the computational nodes aggregate the respective cumulative update amounts $\Delta$wr1 to $\Delta$wr4, share the aggregate cumulative update amount $\Delta$wr_add, and update the pre-accumulation parameters w1 to w4 with the average value $\Delta$wr_add/4 thereof. If the cumulative update amounts of all the computational nodes are less than the threshold value, the variability of the cumulative update amounts of the computational nodes will be relatively small, and, even if Reduce processing and Allreduce processing are omitted, the values of the parameters will not deviate greatly between the computational nodes. However, if the cumulative update amounts of all the computational nodes are not less than the threshold value and at least one cumulative update amount is greater than or equal to the threshold value, the deviation of the values of the parameters increases, and thus Reduce processing and Allreduce processing are performed to aggregate the cumulative update amounts of the computational nodes respectively and update and reset the pre-accumulation parameters of all the computation nodes with the average value of the aggregate cumulative update amount and reset the cumulated update amount Δwr to 0.

The above learning is premised on the computational nodes each optimizing one parameter w within the NN. In this case, the cumulative update amounts Δwr1 to Δwr4 of the parameters w1 to w4 of the computational nodes are each compared with a threshold value. However, because the update amounts Δw1 to Δw4 of the parameters may be positive or may be negative, desirably the absolute values of the cumulative update amounts Δwr1 to Δwr4 of the parameters are compared with a given threshold value TH (TH is positive).

Next, how the plurality of parameters w of an NN are optimized will be described. As a first method, in the determination step S21, the computational nodes individually compare respective cumulative update amounts of the plurality of parameters of the NN with the threshold value TH, and determine whether the respective cumulative update amounts of all the parameters of the NN are less than the threshold value TH, together with determining whether these cumulative update amounts are all less than the threshold value TH in all the computational nodes.

As a second method, the computational nodes group the plurality of parameters of the NN into a plurality of parameters $w_1$, $w_2$, ...$w_n$ of each layer within the NN, and determine, in the determination step S21, whether the maximum value of the absolute values of the cumulative update amounts of the plurality of parameters $w_1$, $w_2$, ...$w_n$ of each layer is less than the threshold value TH. The computational nodes then determine whether the determinations S21 of the plurality of layers of the NN are all less than the threshold value TH, together with determining whether the determinations S21 are all less than the threshold value TH in all the computation nodes. Because only the maximum value is compared with the threshold value TH, the throughput of the determination step S21 is improved.

As a third method, the computational nodes group the plurality of parameters of the NN into a plurality of parameters $w_1$, $w_2$, ...$w_n$ of each layer within the NN, and, in the determination step S21, determine whether an Lp norm (p is a positive integer) of the absolute values of the cumulative update amounts of the plurality of parameters $w_1$, $w_2$, ...$w_n$ of each layer are less than the threshold value TH. The computational nodes then determine whether the determinations of the plurality of layers of the NN are all less than the threshold value TH, together with determining whether the determinations are all less than the threshold value TH in all the computational nodes.

For example, as shown in the following formula, an L1 norm is the sum of the absolute values of the cumulative update amounts of the plurality of parameters $w_1$, $w_2$, ...$w_n$, and an L2 norm is the square root of sum of squares of the absolute values of the cumulative update amounts of the plurality of parameters $w_1$, $w_2$, ...$w_n$. The Lp norm is - pth power root of the sum of pth power of the absolute values of the cumulative update amounts of the plurality of parameters $w_1$, $w_2$, ...$w_n$ raised to the power of p.

[Math. 1]

$$\Delta \text{wr} = (\Delta wr_1, \Delta wr_2, \dots, \Delta wr_n)$$

$$\text{Lp norm of } \Delta \text{wr} = \sqrt[p]{|\Delta wr_1|^p + |\Delta wr_2|^p + \dots + |\Delta wr_n|^p}$$

$$\text{L1 norm of } \Delta \text{wr} = |\Delta wr_1| + |\Delta wr_2| + \dots + |\Delta wr_n|$$

$$\text{L2 norm of } \Delta \text{wr} = \sqrt{|\Delta wr_1|^2 + |\Delta wr_2|^2 + \dots + |\Delta wr_n|^2}$$

In the third method, values obtained by converting the cumulative update amounts of the plurality of parameters of each layer into L1 norm, L2 norm and so on are compared with a threshold value, thus improving throughput of the determination step S21.

[Data-parallel Distributed Learning according to Second Embodiment]

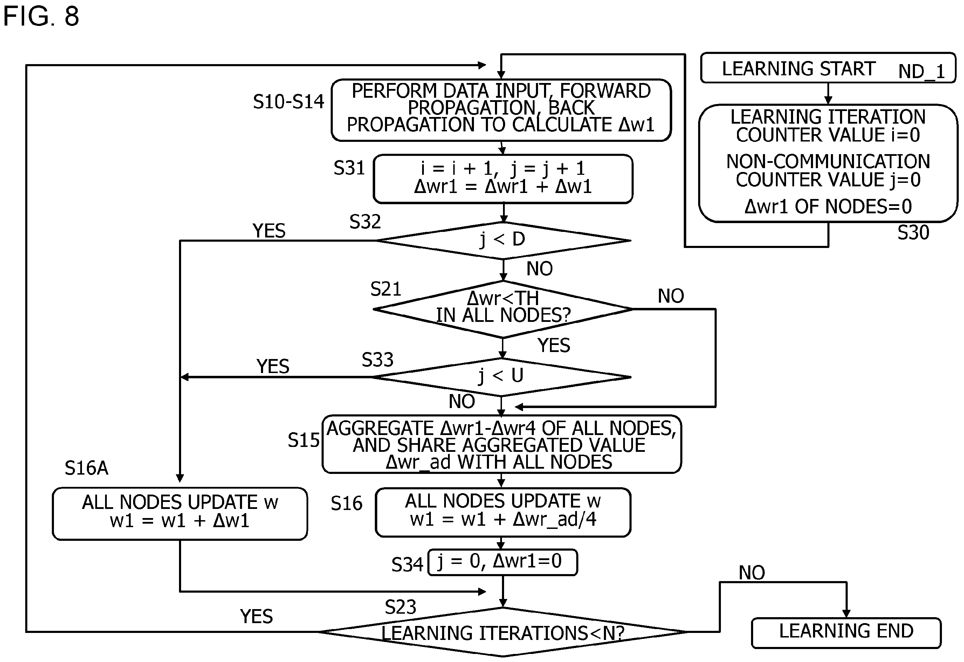

Fig. 8 is a flowchart of data-parallel distributed learning according to a second embodiment. Fig. 8 shows a flowchart of the learning processing of the computational node ND_1 in the flowchart in Fig. 4, and flowcharts of the learning processing of the remaining computational nodes ND_2 to ND_4 are omitted. In this distributed learning, S30, S10 to S16, S20 to S23, and S31 to S33 in the flowchart of the learning processing of the computational node ND_1 shown in Fig. 8 are executed similarly in the remaining computational nodes ND_2 to ND_4.

Generally, immediately after the start of the learning process, the gradients ∆E of the parameters are large and the update amounts ∆w1 to ∆w4 are also large. On the other hand, near the end of the learning process, the gradients ∆E of the parameters are small and the update amounts ∆w1 to ∆w4 are also small. Thus, in the data-parallel distributed learning of the first embodiment, immediately after the start of the learning process, it may be determined every time in the determination step S21 that the cumulative update amounts are not less than the threshold value TH, and Reduce processing and Allreduce processing may be performed every time. On the other hand, as the end of the learning process approaches, in the determination step S21, it may be determined every time in the determination step S21 that the cumulative update amounts are less than the threshold value TH, and Reduce processing and Allreduce processing may not be performed at all.

In order to alleviate the above problems, in the second embodiment, the following processing is performed.

(1) In a D-1th iteration (D is a positive integer) from the beginning of N learning iterations in total, the computational nodes update the respective parameters of the NN with respective update amounts, without performing Reduce processing or Allreduce processing, regardless of the comparison determination with the threshold value TH.

(2) If, from the Dth iteration to the U-1th iteration (U is a positive integer greater than D), Reduce processing and Allreduce processing are not performed in the case where all of the cumulative update amounts ∆wr1 to ∆wr4 are less than the threshold value TH as in the first embodiment, Reduce processing and Allreduce processing are performed to update the respective parameters of the NN with the average value of the cumulative update amounts in the case where at least one of the cumulative update amounts ∆wr1 to ∆wr4 is not less than the threshold value TH.

(3) Furthermore, when Reduce processing and Allreduce processing are successively not performed due to the cumulative update amounts ∆wr1 to ∆wr4 being less than the threshold value TH until Uth iteration, in the Uth iteration, the computational nodes perform Reduce processing and Allreduce processing regardless of the comparison determination with the threshold value TH, and the respective parameters of the NN are updated with the average value of the cumulative update amounts.

(4) The computational nodes repeat the update cycle of the parameters of (1) to (3) described above until a total number of learning iterations N is reached.

According to the above processing, firstly, even immediately after the start of the learning process, the computational nodes do not perform Reduce processing or Allreduce processing in the initial D-1th iteration within the update cycle of (1) to (3), thus enabling the communication frequency to be reduced. Also, in or after the Dth iteration within the update cycle, the number of iterations in which Reduce processing and Allreduce processing are successively not performed increases as the cumulative update amount is smaller, and, conversely, the number of iterations in which Reduce processing and Allreduce processing are successively not performed decreases as the cumulative update amount is larger, based on the comparison determination between the cumulative update amounts of the parameters and the threshold value TH.

On the other hand, secondly, when the end of the learning process approaches, the computational nodes are, in a sense, forced to perform Reduce processing and Allreduce processing, when the number of learning iterations in which Reduce processing and Allreduce processing are successively not performed reaches the Uth iteration within the update cycle of (1) to (3), and all the corresponding parameters of the NN of all the computational nodes are updated to the same value with the average value of the same cumulative update amounts.

The flowchart in Fig. 8 will be specifically described. Fig. 8 is also premised on the four computational nodes each performing learning using one piece of training data, and respectively optimizing the one parameter w within the NN.

In the second embodiment, all the computational nodes count a common learning iteration counter value i and a successive non-communication counter value j. Also, similarly to the first embodiment, the computational nodes cumulatively add the update amounts of the parameters calculated every time learning is performed and stores the cumulative update amounts ∆wr1 to ∆wr4. Also, the computational nodes execute the processing of S30, S31 to S32, and S33, in addition to the processing of the flowchart in Fig. 7. The following description will focus on this processing.

As initialization processing, the computational nodes respectively reset the learning iteration counter value i and the successive non-communication counter value j to "0", and reset the cumulative update amounts ∆wr1 to ∆wr4 of the respective parameters to "0". Next, the computational nodes perform data input of the training data, forward propagation processing and back propagation processing to calculate the update amounts ∆w1 to ∆w4 of the respective parameters (S10-S14). The computational nodes then respectively add one to counter values i and j, and respectively add the calculated update amounts ∆w1 to ∆w4 to the cumulative update amounts ∆wr 1 to ∆wr4 of the parameters to update the cumulative update amounts (S31).

(1) If the successive non-communication counter value j is less than a first reference frequency D (YES in S32), the computational nodes respectively update the parameters w1 to w4 with the respective update amounts ∆w1 to ∆w4 (S16A). The computational nodes repeat the processing of S10 to S14, S31 to S32, and S16A until the successive non-communication counter value j is no longer less than the first reference frequency D. If the first reference frequency D is "2", for example, the computational nodes do not necessarily perform Reduce processing and Allreduce processing, in the first iteration of learning in the update cycle of (1) to (3).

(2) When the successive non-communication counter value j is no longer less than the first reference frequency D (NO in S32), the computational nodes determine whether the cumulative update amounts $\Delta wr1$ to $\Delta wr4$ of the parameters are all less than the threshold value TH in all the computational nodes (S21).

If less than the threshold value TH (YES in S21) and if the successive non-communication counter value j is less than a second reference frequency U (>D) (YES in S33), the computational nodes respectively update the parameters w1 to w4 with the respective update amounts $\Delta w1$ to $\Delta w4$ (S16A).

If not less than the threshold value TH (NO in S21), the computational nodes ND_1 to ND_4 perform Reduce processing and Allreduce processing (S15), and respectively update the parameters w1 to w4 with the average value $\Delta wr\_add/4$ of the cumulative update amounts (S16). The computational nodes then reset the successive non-communication count value j to "0" and respectively reset the cumulative update amounts $\Delta wr1$ to $\Delta wr4$ to "0" (S34A). In this case, the update cycles j=D - U of (1) to (3) is reset.

(3) If less than the threshold value TH (YES in S21), and when the successive non-communication counter value j is no longer less than the second reference frequency U (>D) (NO in S33), the computational nodes execute Reduce processing and Allreduce processing (S15), update the parameters with the average value of the cumulative update amounts (S16), and reset the successive non-communication count value j and the cumulative update amounts to "0" (S22A). The update cycle is thus reset.

In the case of updating the plurality of parameters w of the NN of the computational nodes, similarly to the first embodiment, the computation nodes, in the determination step S21, may perform a determination, such as determining whether the absolute value of the cumulative update amount of each parameter w is less than a threshold value TH, whether the maximum value of the cumulative update amounts of the plurality of parameters of each layer is less than a threshold value TH, or whether the L1 norm or L2 norm of the absolute values of the cumulative update amounts of the plurality of parameters of each layer is less than a threshold value TH.

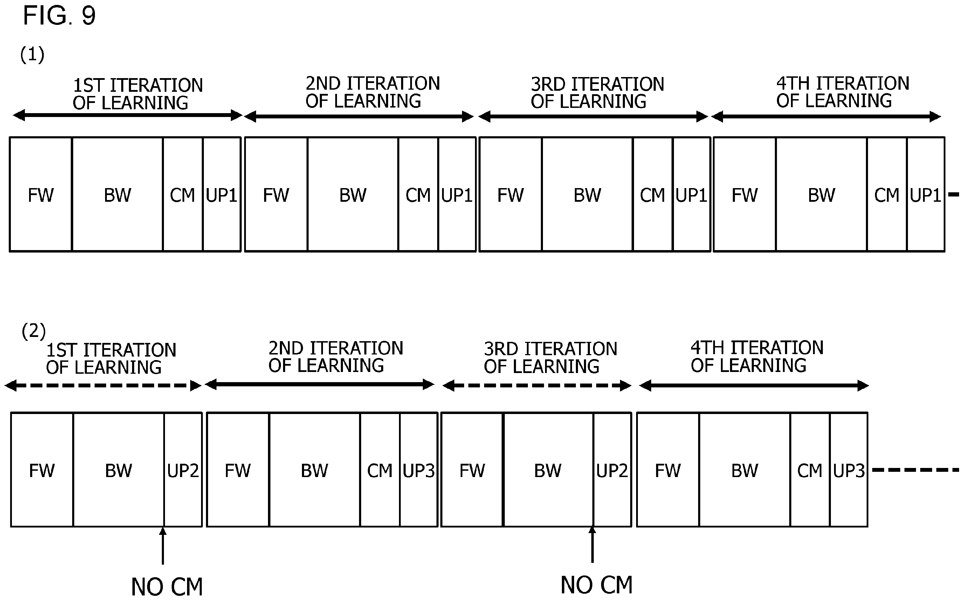

Fig. 9 is a diagram showing an example of change in the update cycle of learning in the second embodiment. Fig. 9(1) is an example of change in the case where the update cycle of the present embodiment is not performed. One iteration of learning includes, on the data of training data, forward propagation processing FW back propagation processing BW, Reduce processing and Allreduce processing CM, and parameter update processing UP. The update processing UP1 in Fig. 9(1) is processing for updating parameters with the average value $\Delta w\_ad/4$ of the update amounts of parameters of the NN of all the computational nodes. In the case of Fig. 9(1), the computational nodes execute Reduce processing and Allreduce processing CM and parameter update processing UP1 in all learning iterations.

Fig. 9(2) is an example of change in the learning update cycle in the second embodiment. The first to fourth iterations of learning in Fig. 9(2) correspond to learning within the aforementioned update cycle.

Update processing UP2 in Fig. 9(2) is processing in which the computational nodes respectively update the parameters with the update amounts $\Delta w$ of the parameters of the NN (S16A).

Update processing UP3 in Fig. 9(2) is processing in which the computational nodes respectively update the parameters with the average value $\Delta wr\_ad/4$ of the cumulative update amount $\Delta wr$ of the parameters of the NN (S16).

In the example in Fig. 9(2), D=2, and the computational nodes execute the update processing UP2, without executing the Reduce processing and Allreduce processing CM in the first learning. In the second iteration of learning, j=D, and the computational nodes execute Reduce processing and Allreduce processing CM and the update processing UP3. The third and fourth iterations of learning are the same as the first and second iterations of learning.

According to the second embodiment, the computational nodes do not execute Reduce processing and Allreduce processing CM in all iterations of learning, thus enabling the overall computation time of learning to be suppressed by not executing the processing CM.

In the above embodiments, the cumulative update amounts $\Delta wr$ of the parameters are aggregated in the Reduce processing and Allreduce processing, and the parameters of the NN are updated with the average value $\Delta wr\_ad/4$. However, the Reduce processing and Allreduce processing may be performed for the gradients $\Delta E$ of the differences instead of the update amounts of the parameters. This is because the update amounts $\Delta w$ of the parameters are calculated by multiplying the gradients $\Delta E$ of the differences by the learning rate $\eta$, and, accordingly, the cumulative update amounts $\Delta wr$ can be calculated by multiplying cumulative gradients by the learning rate. In that case, if the computational nodes do not perform Reduce processing and Allreduce processing, accumulation of the gradients $\Delta E$ of the differences is updated, and if Reduce processing and Allreduce processing are performed, the cumulative gradients $\Delta Er$ of the computational nodes are aggregated, the aggregate value (addition value) of the cumulative gradients $\Delta Er$ is shared with all the computational nodes, and the pre-accumulation parameters w are updated with the average value $\Delta Er\_ad/4$ of the cumulative update amounts obtained by multiplying the average value $\Delta Wr\_ad/4$ of the aggregate value (addition value) of the cumulative gradients $\Delta Er$ by the learning rate $\eta$.

The above embodiments described an example in which each computational node executes computational operations of an NN for one piece of training data in each learning iteration. However, each computational node may perform computational operations of an NN for plural pieces of training data in each learning iteration. In that case, the number of pieces of training data per batch is obtained by multiplying the number of pieces of training data of each computational node by the number of computational nodes (4 in the above example). The computational nodes then respectively update the parameters of the NN, using the average value of the update amounts $\Delta w$ of the parameters or the gradients $\Delta E$ of the plurality of differences E respectively calculated in the plurality of processes. Also, in Reduce processing and Allreduce processing, the plurality of computational nodes aggregate the cumulative values of the update amounts or gradients, share the average of the aggregate values with all the computational nodes, and respectively update the parameters of the NN with the average of the aggregate value.

The above embodiments can be applied to learning of a NN such as a simple perceptron or a multilayer perceptron, a deep NN, which is a NN with a deep hierarchy, or the like. Deep NNs include, for example, convolutional NNs having a plurality of convolutional layers, pooling layers and fully connected layers, autoencoder NNs in which the input layer and output layer have nodes of the same size, and recurrent NNs.

REFERENCE SIGNS LIST

| | |
|---|---|
| 1 | Neural network system, NN system |
| 10 | Main processor |
| 13 | Sub-processor module |
| 14 | Sub-processor, computational node |
| 20 | Neural network learning program |
| 22 | Neural network program |
| 24 | Training data |
| 26 | Parameter w |
| ND_1-ND_4 | Computational Node |
| w1-w4 | Parameter |
| $\Delta w1-\Delta w4$ | Parameter update amount |
| $\Delta wr1-\Delta wr4$ | Cumulative update amount |
| $\Delta wr\_add$ | Aggregate value of cumulative update amounts |
| $\Delta wr\_add/4$ | Average value of cumulative update amounts |

**Claims**

**1.** A neural network system comprising:

a memory; and
a plurality of processors configured to access the memory,
wherein in each of a plurality of iterations of learning,
the plurality of processors each executes a computational operation of a neural network based on an input of training data and a parameter within a neural network to calculate an output of the neural network, and calculates a gradient of a difference between the calculated output and supervised data of the training data or an update amount based on the gradient,
in a first case in which a cumulative of the gradient or update amount is not less than a threshold value, the plurality of processors execute first update processing for transmitting, to the other processors among the plurality of processors, a cumulative of a plurality of the gradients or update amounts respectively calculated thereby to aggregate the cumulatives of the plurality of gradients or update amounts, receiving the aggregated cumulatives of the gradients or update amounts, and updating the parameter with the aggregated cumulatives of the gradients or update amounts, and
in a second case in which the cumulative of the gradient or update amount is less than the threshold value, the plurality of processors execute second update processing for updating the respective parameters with the gradients or update amounts which the plurality of processors respectively calculates, without aggregating the cumulative of the plurality of gradients or update amounts through transmission.

**2.** The neural network system according to claim 1,

wherein the plurality of processors further execute the second update processing, if, in the first case, a number of iterations of learning in which the second update processing was successively performed is less than a first reference frequency.

3. The neural network system according to claim 2,
wherein the plurality of processors further execute the first update processing, if, in the second case, the number of iterations of learning is not less than a second reference frequency greater than the first reference frequency.

4. The neural network system according to claim 3,
wherein the plurality of processors further execute the second update processing in the second case, if the number of iterations of learning is not less than the first reference frequency and is less than the second reference frequency.

5. The neural network system according to claim 4,
wherein the plurality of processors further execute the first update processing, if, in the second case, the number of iterations of learning is not less than the second reference frequency.

6. The neural network system according to claim 1,
wherein, in the first case, at least one of the cumulatives of the gradients or update amounts among the cumulatives of the plurality of gradients or update amounts respectively calculated by the plurality of processors is not less than the threshold value.

7. The neural network system according to claim 1,
wherein aggregation of the plurality of gradients or update amounts is performed by one of adding the cumulatives of the plurality of gradients or update amounts, or by obtaining a maximum value of the cumulatives of the plurality of gradients or update amounts.

8. The neural network system according to claim 1,
wherein the aggregated cumulative of the gradients or update amounts is a value obtained by accumulating the plurality of gradients or update amounts over the iterations of second update processing, and averaging the cumulatives of the plurality of gradients or update amounts.

9. A method of learning a neural network comprising:

in each of a plurality of iterations of learning,
executing, by each of a plurality of processors, a computational operation of a neural network based on an input of training data and a parameter within a neural network to calculate an output of the neural network, and calculating a gradient of a difference between the calculated output and supervised data of the training data or an update amount based on the gradient,
in a first case in which a cumulative of the gradient or update amount is not less than a threshold value, executing, by the plurality of processors, first update processing for transmitting, to the other processors among the plurality of processors, a cumulative of a plurality of the gradients or update amounts respectively calculated thereby to aggregate the cumulatives of the plurality of gradients or update amounts, receiving the aggregated cumulatives of the gradients or update amounts, and updating the parameter with the aggregated cumulatives of the gradients or update amounts, and
in a second case in which the cumulative of the gradient or update amount is less than the threshold value, executing, by the plurality of processors, second update processing for updating the respective parameters with the gradients or update amounts respectively calculated by the plurality of processors, without aggregating the cumulative of the plurality of gradients or update amounts through transmission.

10. A program for learning of a neural network causing a plurality of processors to execute the learning of a neural network, the learning comprising:

in each of a plurality of iterations of learning,
executing, by each of the plurality of processors, a computational operation of a neural network based on an input of training data and a parameter within a neural network to calculate an output of the neural network, and calculating a gradient of a difference between the calculated output and supervised data of the training data or an update amount based on the gradient,
in a first case in which a cumulative of the gradient or update amount is not less than a threshold value, executing, by the plurality of processors, first update processing for transmitting, to the other processors among the plurality of processors, a cumulative of a plurality of the gradients or update amounts respectively calculated thereby to aggregate the cumulatives of the plurality of gradients or update amounts, receiving the aggregated cumulatives of the gradients or update amounts, and updating the parameter with the aggregated cumulatives of the gradients or update amounts, and

in a second case in which the cumulative of the gradient or update amount is less than the threshold value, executing, by the plurality of processors, second update processing for updating the respective parameters with the gradients or update amounts respectively calculated by the plurality of processors, without aggregating the cumulative of the plurality of gradients or update amounts through transmission.

FIG. 1

30 CLIENT TERMINAL DEVICE

32 CLIENT TERMINAL DEVICE

1

13

10 CPU

12 MAIN MEMORY

14 GPU    16 GPU MEMORY

18 IF

28

20 NN LEARNING PROGRAM

22 NN PROGRAM

24 TRAINING DATA (INPUT, LABEL)

26 PARAMETER w

EP 4 089 586 A1

# FIG. 2

EP 4 089 586 A1

FIG. 3

EP 4 089 586 A1

FIG. 4

| ND_1 | ND_2 | ND_3 | ND_4 |
|---|---|---|---|
| **S10** INPUT DATA D1 | **S10** INPUT DATA D2 | | |
| **S11** EXECUTE COMPUTATIONAL OPERATION OF EACH LAYER IN FORWARD PROPAGATION | **S11** EXECUTE COMPUTATIONAL OPERATION OF EACH LAYER IN FORWARD PROPAGATION | | |
| **S12** CALCULATE DIFFERENCE E1 BETWEEN OUTPUT OF NN AND LABEL | **S12** CALCULATE DIFFERENCE E2 BETWEEN OUTPUT OF NN AND LABEL | S10-S14 | S10-S14 |
| **S13** PROPAGATE DIFFERENCE E1 THROUGH LAYERS IN BACK PROPAGATION | **S13** PROPAGATE DIFFERENCE E2 THROUGH LAYERS IN BACK PROPAGATION | | |
| **S14** CALCULATE GRADIENT $\Delta E1$ OF EACH LAYER AND UPDATE AMOUNT $\Delta w1$ | **S14** CALCULATE GRADIENT $\Delta E2$ OF EACH LAYER AND UPDATE AMOUNT $\Delta w2$ | | |

$\Delta w1$ $\qquad$ $\Delta w2$ $\qquad$ $\Delta w3$ $\qquad$ $\Delta w4$

**S15** AGGREGATE $\Delta w1$-$\Delta w4$ OF ALL NODES WITH FUNCTION f (Reduce), AND SHARE AGGREGATE VALUE $\Delta w\_ad$ WITH ALL NODES (Allreduce)

| | | | |
|---|---|---|---|
| **S16** $w1 = w1 + \Delta w\_ad/4$ | **S16** $w2 = w2 + \Delta w\_ad/4$ | S16-S17 | S16-S17 |
| **S17** RETURN TO S10 | **S17** RETURN TO S10 | | |

FIG. 5

Reduce

ND_1  ND_2  ND_3  ND_4

y1  y2  y3  y4

f(y1,y2,y3,y4)

28

Allreduce

ND_1  ND_2  ND_3  ND_4

y1  y2  y3  y4

f(y1,y2,y3,y4)  f(y1,y2,y3,y4)  f(y1,y2,y3,y4)  f(y1,y2,y3,y4)

28

# FIG. 6

| | ND_1 | ND_2 | ND_3 | ND_4 |
|---|---|---|---|---|
| **Reduce** | Δw1 | Δw2 | Δw3 | Δw4 |
| **Allreduce** | Δw_ad=Δw1+Δw2+Δw3+Δw4 | Δw_ad | Δw_ad | Δw_ad |

28

$$\Delta w_{av} = \Delta w_{ad}/4$$

| | ND_1 | ND_2 | ND_3 | ND_4 |
|---|---|---|---|---|
| **Average** | Δw1 / Δw_av = Δw_ad/4 | Δw2 / Δw_ad/4 | Δw3 / Δw_ad/4 | Δw4 / Δw_ad/4 |

UPDATE PARAMETERS w WITH
$\Delta w\_av = \Delta w\_ad/4$

| **Update** | w1 = w1 + Δw_ad/4 | w2 | w3 | w4 |
|---|---|---|---|---|

EP 4 089 586 A1

# FIG. 7

**ND_1**: LEARNING START

**ND_2 − ND_4**

S10-S14: PERFORM DATA INPUT, FORWARD PROPAGATION, BACK PROPAGATION TO CALCULATE Δw1

S20: Δwr1= Δwr1 + Δw1

S21: Δwr<TH IN ALL NODES?  — NO / YES

S15: AGGREGATE Δwr1-Δwr4 OF ALL NODES, AND SHARE AGGREGATED VALUE Δwr_ad WITH ALL NODES

S16A: ALL NODES UPDATE w  w1 = w1 + Δw1

S16: UPDATE w  w1 = w1 + Δwr_ad/4

S22: Δwr1=0

S23: LEARNING ITERATIONS<N?  — YES / NO

LEARNING END

S10-S16
S16A
S20-S21

S15

S16
S16A
S22-S23

EP 4 089 586 A1

# FIG. 8

**S10-S14** PERFORM DATA INPUT, FORWARD PROPAGATION, BACK PROPAGATION TO CALCULATE $\Delta w1$

LEARNING START ND_1

LEARNING ITERATION COUNTER VALUE i=0

NON-COMMUNICATION COUNTER VALUE j=0

$\Delta wr1$ OF NODES=0

**S30**

**S31** $i = i + 1, \quad j = j + 1$
$\Delta wr1 = \Delta wr1 + \Delta w1$

**S32** YES ← $j < D$ → NO

**S21** $\Delta wr < TH$ IN ALL NODES? — NO

YES

**S33** YES ← $j < U$ → NO

**S15** AGGREGATE $\Delta wr1 - \Delta wr4$ OF ALL NODES, AND SHARE AGGREGATED VALUE $\Delta wr\_ad$ WITH ALL NODES

**S16A** ALL NODES UPDATE w
$w1 = w1 + \Delta w1$

**S16** ALL NODES UPDATE w
$w1 = w1 + \Delta wr\_ad/4$

**S34** $j = 0, \Delta wr1 = 0$

**S23** YES ← LEARNING ITERATIONS<N? → NO

LEARNING END

EP 4 089 586 A1

## FIG. 9

(1)

| 1ST ITERATION OF LEARNING | 2ND ITERATION OF LEARNING | 3RD ITERATION OF LEARNING | 4TH ITERATION OF LEARNING |
|---|---|---|---|

| FW | BW | CM | UP1 | FW | BW | CM | UP1 | FW | BW | CM | UP1 | FW | BW | CM | UP1 |
|---|---|---|---|---|---|---|---|---|---|---|---|---|---|---|---|

(2)

| 1ST ITERATION OF LEARNING | 2ND ITERATION OF LEARNING | 3RD ITERATION OF LEARNING | 4TH ITERATION OF LEARNING |
|---|---|---|---|

| FW | BW | UP2 | FW | BW | CM | UP3 | FW | BW | UP2 | FW | BW | CM | UP3 |
|---|---|---|---|---|---|---|---|---|---|---|---|---|---|

NO CM                                      NO CM

EP 4 089 586 A1

**INTERNATIONAL SEARCH REPORT**

International application No.

PCT/JP2020/000644

A. CLASSIFICATION OF SUBJECT MATTER
Int. Cl. G06N3/08(2006.01)i
FI: G06N3/08

According to International Patent Classification (IPC) or to both national classification and IPC

B. FIELDS SEARCHED

Minimum documentation searched (classification system followed by classification symbols)
Int. Cl. G06N3/08

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2019-212111 A (PREFERRED NETWORKS INC.) 12 December 2019, in particular, paragraphs [0038]-[0072], fig. 4 | 1-10 |
| A | JP 2019-109875 A (TOSHIBA CORP.) 04 July 2019, in particular, paragraphs [0013]-[0018] | 1-10 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06.03.2020 | 24.03.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 4 089 586 A1**

| Patent Documents referred to in the Report | Publication Date | Patent Family | Publication Date |
|---|---|---|---|
| JP 2019-212111 A | 12.12.2019 | (Family: none) | |
| JP 2019-109875 A | 04.07.2019 | US 2019/0188563 A1 in particular, paragraphs [0027]-[0032] | |

**INTERNATIONAL SEARCH REPORT**
Information on patent family members

International application No.

PCT/JP2020/000644

Form PCT/ISA/210 (patent family annex) (January 2015)

**EP 4 089 586 A1**

**Patent documents cited in the description**

- JP 2018120470 A

- JP 2012079080 A